# FASCICULE DE BREVET EUROPEEN

(11) **EP 2 232 155 B1**
(45) Date de publication et mention de la délivrance du brevet: **04.12.2019**
(21) Numéro de dépôt: 09703886.3
(22) Date de dépôt: 19.01.2009
(51) Int. Cl.: F24D 17/00, F24D 17/02, F24F 5/00, F24F 7/08, F24F 12/00, F25B 49/02

(54) **INSTALLATION DE PRODUCTION D'EAU CHAUDE SANITAIRE POUR UNE HABITATION COLLECTIVE**
ANLAGE ZUR BEREITSTELLUNG VON HYGIENISCHEM WARMWASSER FÜR MEHRFAMILIENHÄUSER
FACILITY FOR PRODUCING SANITARY HOT WATER FOR CONGREGATE HOUSING

(30) Priorité: 22.01.2008 FR 0800315
(43) Date de publication de la demande: 29.09.2010
(73) Titulaire: ALDES AERAULIQUE, 69200 Venissieux Cedex (FR)
(72) Inventeur: LABAUME, Damien, 31570 Preserville (FR); BUSEYNE, Serge, 31200 Toulouse (FR)
(74) Mandataire: Verriest, Philippe
(86) Numéro de dépôt international: PCT/FR2009/050065
(87) Numéro de publication internationale: WO 2009/092976

(56) Documents cités:
- EP-A- 0 878 672
- EP-A- 1 847 783
- WO-A-89/05947
- WO-A-90/11476
- DE-A1- 4 412 844
- DE-A1- 10 058 273
- DE-A1- 19 819 639
- DE-U1-202004 008 792
- US-A- 5 050 394

## Description

L'invention concerne une installation de production d'eau chaude sanitaire pour une habitation collective.

Compte tenu des contraintes environnementales et du coût important de l'énergie, il est nécessaire de réduire la consommation des différentes installations équipant une habitation. Les besoins de l'installation de chauffage de l'habitation ont été considérablement réduits, en particulier par l'utilisation de nouveaux matériaux d'isolation, la pose de vitrages adaptés, et la diminution des ponts thermiques lors de la construction du bâtiment.

De même, les besoins d'une installation destinée à la ventilation de l'habitation sont considérablement réduits en utilisant une ventilation double flux, permettant de récupérer des calories sur le flux d'air extrait pour les transférer au flux d'air insufflé ou en utilisant une ventilation modulée, dont le fonctionnement est limité aux besoins réels et fonction, par exemple, du taux d'hygrométrie à l'intérieur de l'habitation.

On constate actuellement que, dans les habitations de type « basse consommation », l'installation destinée à la production d'eau chaude sanitaire est celle consommant le plus d'énergie.

Il apparaît donc nécessaire de réduire les besoins en énergie de ce type d'installation.

Dans ce but, il est connu d'utiliser une installation de production d'eau chaude sanitaire comportant un chauffe-eau comprenant un réservoir à l'intérieur duquel est stocké un fluide à chauffer, ainsi qu'un système de ventilation mécanique contrôlée destiné à extraire de l'air d'une habitation, le système de ventilation mécanique contrôlée étant couplé à un circuit thermodynamique à l'intérieur duquel circule un fluide frigorigène, le circuit thermodynamique comportant un évaporateur agencé pour échanger de la chaleur avec l'air extrait, un compresseur, un détendeur, et un condenseur agencé pour échanger de la chaleur avec le fluide contenu dans le réservoir.

Une telle installation est généralement désignée par le terme « chauffe-eau thermodynamique sur l'air extrait ».

Une installation de ce type, comme décrite dans le document EP 1 847 783 permet de récupérer une partie de la chaleur de l'air extrait et de la transférer au fluide contenu dans le réservoir du chauffe-eau, par l'intermédiaire du circuit thermodynamique et des échangeurs de chaleur formés par t'évaporateur et le condenseur.

Les installations connues de ce type ne sont toutefois pas adaptées aux habitations collectives.

Pour des raisons de sécurité liées à la propagation des incendies, il n'est pas possible de rejeter l'air extrait de chaque installation dans un conduit d'extraction commun aux différents logements. Dans le cas où une telle installation était prévue et dans l'hypothèse d'une panne au niveau de l'extraction d'un des logements, par exemple en cas de défaillance d'un ventilateur d'extraction correspondant, les phénomènes de surpression à l'intérieur du conduit commun entraîneraient un risque de propagation des fumées ou du feu à l'intérieur du logement équipé du ventilateur défaillant.

Il serait alors nécessaire que chaque logement possède son propre réseau d'extraction d'air, ce qui engendre un surcoût et/ou une difficulté importante de mise en œuvre.

Il existe d'autres d'installation de production d'eau chaude sanitaire, adaptées aux habitations collectives.

Il est par exemple connu d'utiliser une installation de production d'eau chaude centralisée, équipée d'une chaudière raccordée à un réseau de distribution permettant d'acheminer l'eau chaude sanitaire aux différents logements. Une telle installation doit ainsi comporter au moins une pompe de circulation de l'eau chaude.

Ce type d'installation est coûteux et entraîne de fortes déperditions thermiques puisque l'eau chaude doit circuler sur de longues distances dans le réseau de distribution, ainsi qu'une consommation électrique au niveau des pompes.

Une autre installation connue est le chauffe-eau solaire collectif. Une telle installation comporte un réservoir commun d'eau à chauffer, à partir duquel s'étend un réseau de distribution d'eau chaude sanitaire dans les différents logements. Ce type d'installation présente les mêmes inconvénients que l'installation précédente.

L'invention vise à remédier à ces inconvénients en proposant une installation de production d'eau chaude sanitaire adaptée à une habitation collective, peu coûteuse, et présentant un rendement accru.

A cet effet, l'invention concerne une installation de production d'eau chaude sanitaire pour une habitation collective, caractérisée en ce qu'elle comporte une pluralité de chauffe-eau, destinés à équiper une pluralité de logements individuels de l'habitation, chaque chauffe-eau comportant un réservoir à l'intérieur duquel est stocké un fluide à chauffer, chaque logement étant en outre équipé d'au moins une conduite d'extraction d'air, en particulier au niveau des pièces techniques, raccordée à un réseau d'extraction d'air commun aux différents logements, chaque logement comportant en outre des moyens d'échange de chaleur agencés pour échanger de la chaleur entre l'air extrait circulant dans la conduite d'extraction d'air et le fluide contenu dans le réservoir, de manière à chauffer le fluide en vue de produire de l'eau chaude sanitaire, caractérisée en ce que le réseau d'extraction d'air commun aux différents logements est équipé d'au moins un ventilateur apte à créer une dépression dans ledit réseau d'extraction, de manière à effectuer l'extraction d'air de chaque logement.

L'eau chaude sanitaire peut être produite au niveau de chaque logement, de manière à limiter les déperditions thermiques liées au transport de l'eau sur de longues distances.

En outre, les calories puisées dans l'air extrait permettent le chauffage du fluide contenu dans le réservoir du chauffe-eau, de manière à augmenter le rendement global de l'installation.

Enfin, le fait que l'extraction soit réalisée par l'intermédiaire d'un réseau commun d'extraction d'air évite de prévoir des moyens de ventilation, par exemple des ventilateurs, au niveau de chaque logement. De cette manière, les phénomènes précités de surpression à l'intérieur du réseau d'extraction sont évités et, par conséquent, les risques de propagation d'incendie également.

Selon une caractéristique de l'invention, les moyens d'échange de chaleur comportent un circuit thermodynamique à l'intérieur duquel circule un fluide frigorigène, le circuit thermodynamique comportant un évaporateur agencé pour échanger de la chaleur avec l'air extrait, un compresseur, un détendeur, et un condenseur agencé pour échanger de la chaleur avec le fluide contenu dans le réservoir.

Selon une forme de réalisation de l'invention, le condenseur est disposé à l'intérieur du réservoir du chauffe-eau, de manière à échanger directement de la chaleur avec le fluide contenu dans le réservoir.

Selon une autre forme de réalisation de l'invention, les moyens d'échange de chaleur comportent un circuit secondaire d'échange de chaleur à l'intérieur duquel circule un fluide caloporteur, traversant le condenseur de manière à échanger de la chaleur avec le fluide caloporteur, le circuit secondaire comportant en outre un échangeur de chaleur disposé à l'intérieur du réservoir du chauffe-eau, de manière à échanger de la chaleur avec le fluide contenu dans le réservoir.

Selon une possibilité de l'invention, l'installation comporte un réseau d'insufflation d'air commun aux différents logements, chaque logement étant équipé d'un échangeur de chaleur de type double flux, dans lequel le flux d'air insufflé dans le logement et provenant du réseau d'insufflation d'air échange de la chaleur avec le flux d'air extrait du logement.

L'utilisation d'un échangeur de type double flux permet de limiter les déperditions thermiques liées à l'extraction d'air et de récupérer une partie des calories contenues dans l'air extrait pour chauffer l'air insufflé dans le logement.

Préférentiellement, l'échangeur de chaleur de type double flux est disposé en amont des moyens d'échange de chaleur entre l'air extrait et le fluide contenu dans le réservoir, dans le sens de circulation de l'air extrait.

Selon une caractéristique de l'invention, l'installation comporte des moyens de recyclage permettant de diriger une partie de l'air insufflé provenant du réseau d'insufflation, directement dans le réseau d'extraction d'air, en amont des moyens d'échange de chaleur dans le sens de circulation de l'air extrait.

Les moyens de recyclage permettent de pouvoir accélérer, si nécessaire, le débit d'air circulant dans les moyens d'échange de chaleur, de manière à favoriser le chauffage de l'eau chaude sanitaire.

Avantageusement, le réseau d'extraction d'air commun aux différents logements est équipé d'au moins un ventilateur apte à effectuer l'extraction d'air de chaque logement.

Selon une possibilité de l'invention, le réseau d'insufflation d'air commun aux différents logements est équipé d'au moins un ventilateur apte à effectuer l'insufflation d'air de chaque logement.

De toute façon, l'invention sera bien comprise à l'aide de la description qui suit, en référence au dessin schématique annexé représentant, à titre d'exemples non limitatifs, plusieurs formes d'exécution de cette installation de production d'eau chaude sanitaire.
Figure 1 est une représentation schématique d'une habitation collective équipée d'une installation selon l'invention :
Figure 2 est un plan d'un logement de l'habitation détaillant l'emplacement des différents éléments de l'installation ;
Figure 3 est une vue schématique d'une partie de l'installation, selon une première forme de réalisation de l'invention ;
Figure 4 est une vue correspondant à la figure 3, d'une seconde forme de réalisation de l'invention.

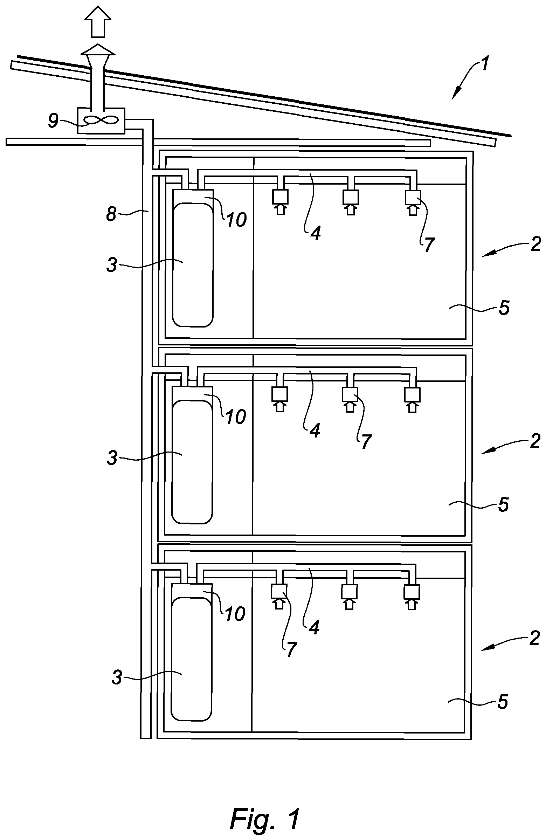

Une habitation collective 1 équipée d'une installation de production d'eau chaude sanitaire est représentée à la figure 1.

L'habitation comporte une pluralité de logements 2 répartis sur plusieurs étages. Seul un logement 2 par étage est représenté à la figure 1 pour des raisons de lisibilité.

Chaque logement 2 comporte un chauffe-eau comportant un réservoir 3 à l'intérieur duquel est stocké un fluide à chauffer.

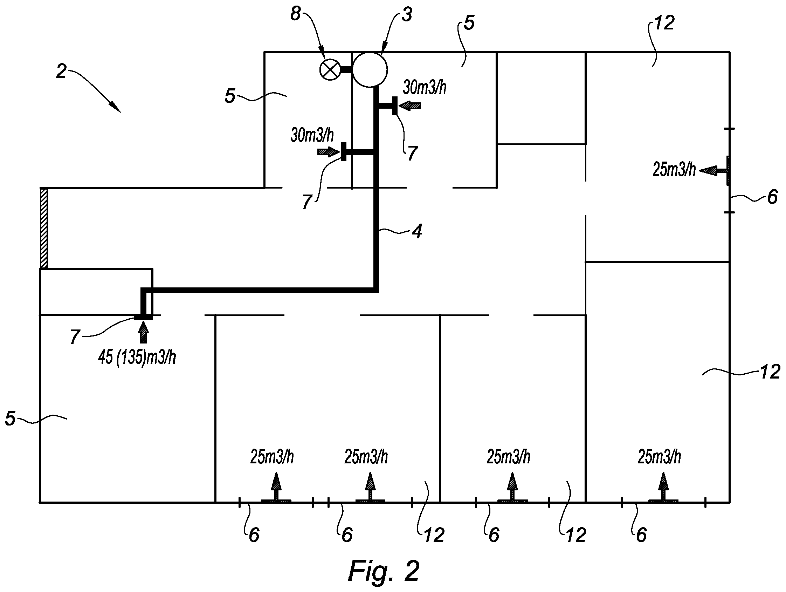

Chaque logement 2 est en outre équipé d'au moins une conduite d'extraction d'air 4, en particulier au niveau des pièces techniques 5, comme cela est mieux représenté à la figure 2.

Dans le cas représenté aux figures 1 et 2, l'air entre dans le logement 2 au niveau des fenêtres 6 et est extrait par l'intermédiaire de bouches d'extraction 7 en communication avec la conduite 4, comme cela est représenté par des flèches. L'installation fonctionne ainsi avec un système de ventilation de type simple flux.

Les débits d'air insufflé et d'air extrait indiqué à la figure 2 sont donnés à titre d'exemple uniquement. Différentes configurations peuvent, bien entendu, être envisagées.

La conduite 4 d'extraction d'air de chaque logement 2 est raccordée à un réseau d'extraction d'air 8 commun aux différents logements, le réseau d'extraction d'air 8 comportant une partie supérieure équipée d'un ventilateur 9.

En outre, chaque logement 2 comporte des moyens d'échange de chaleur 10 agencés pour chauffer le fluide contenu dans le réservoir 3 à partir de l'air extrait circulant dans la conduite 4.

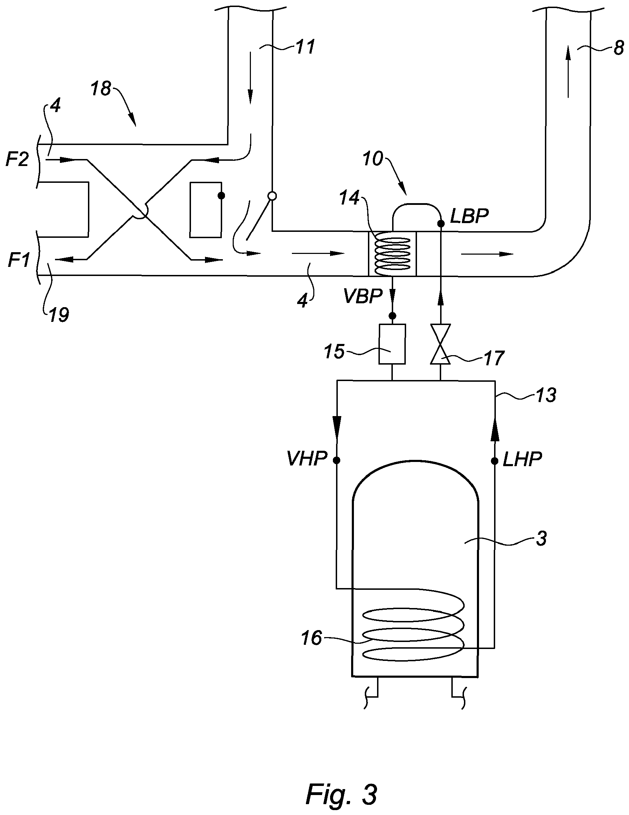

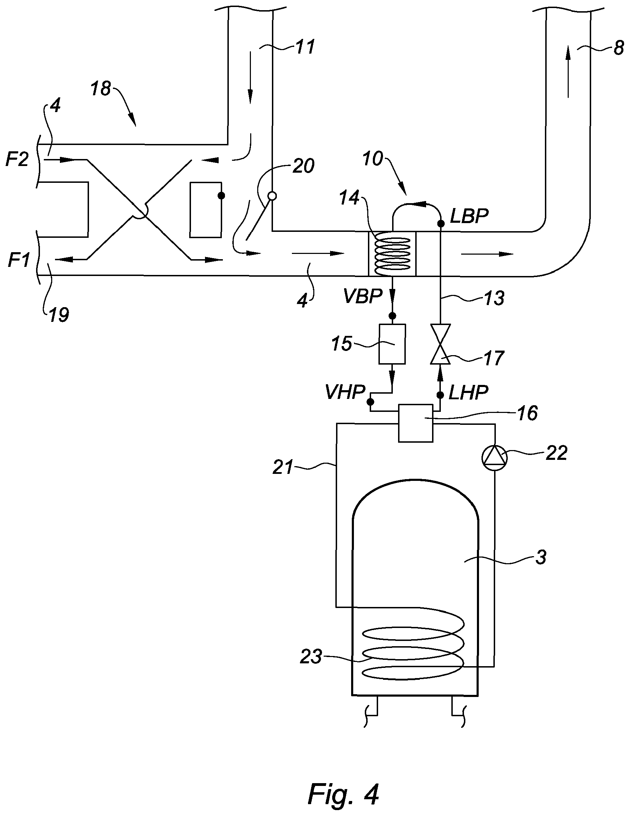

Selon une autre possibilité de l'invention, un réseau d'insufflation d'air 11 commun aux différents logements (figures 3 et 4), équipé d'un ventilateur. Dans ce cas, l'insufflation et l'extraction d'air sont commandées simultanément. On parle ainsi de ventilation de type double flux. Dans le cas d'une ventilation à double flux, les entrées d'air sont réalisées, non plus au niveau des fenêtres, mais au niveau de bouches d'entrées d'air disposées dans les pièces de séjour 12.

La structure des moyens d'échange de chaleur 10 va maintenant être décrite plus en détail en référence aux figures 3 et 4, dans le cas d'une ventilation de type double flux.

Selon une première forme de réalisation représentée à la figure 3, les moyens d'échange de chaleur 10 comportent un circuit thermodynamique 13 à l'intérieur duquel circule un fluide frigorigène.

Le circuit thermodynamique 13 comporte successivement, dans le sens de circulation de fluide frigorigène, un évaporateur 14 disposé dans la conduite 4 et agencé pour échanger de la chaleur avec l'air extrait, un compresseur 15, un condenseur 16 agencé pour échanger de la chaleur avec le fluide contenu dans le réservoir 3, et un détendeur 17. Le sens de circulation du fluide frigorigène est représenté par des flèches. En outre, la phase et la pression du fluide frigorigène sont identifiés par les références VBP (Vapeur Basse Pression), VHP (Vapeur Haute Pression), LHP (Liquide Haute Pression) et LBP (Liquide Basse Pression).

Plus particulièrement, le condenseur 16 présente la forme d'un sepentin et est disposé à l'intérieur du réservoir 3 du chauffe-eau, de manière à échanger directement de la chaleur avec le fluide contenu dans le réservoir 3.

L'installation comporte en outre un échangeur de chaleur de type double flux 18, dans lequel le flux d'air insufflé F1 dans le logement 2 échange de la chaleur avec le flux d'air extrait F2 du logement 2.

Plus précisément, l'échangeur double flux 18 permet d'échanger de la chaleur entre le flux d'air entrant F1 provenant du réseau d'insufflation d'air 11 et dirigé vers le logement 2 par l'intermédiaire d'une conduite de distribution individuelle 19 permettant de distribuer l'air insufflé dans les différentes pièces de séjour 12, et le flux d'air sortant F2 provenant des pièces techniques 5, acheminé depuis ces différentes pièces par la conduite d'extraction d'air 4, et dirigé vers le réseau d'extraction d'air 8.

Ainsi, l'échangeur de chaleur de type double flux 18 est disposé en amont de l'évaporateur 14 du circuit thermodynamique 13, dans le sens de circulation de l'air extrait.

En outre, l'installation comporte des moyens de recyclage 20 permettant de diriger une partie de l'air insufflé, provenant du réseau d'insufflation 11, directement dans le réseau d'extraction d'air 8, c'est-à-dire sans le rejeter dans le logement 2. Les moyens de recyclage sont situés en amont de l'évaporateur, dans le sens de circulation de l'air extrait, et comportent un clapet commandé ainsi qu'une branche de dérivation permettant de dériver l'air insufflé hors de l'échangeur double flux 18.

Dans une seconde forme de réalisation représentée à la figure 4, le condenseur 16 est disposé à l'extérieur du réservoir 3. Les moyens d'échange de chaleur 10 comportent alors en outre un circuit secondaire 21 d'échange de chaleur, équipé d'une pompe 22 et à l'intérieur duquel circule un fluide caloporteur. Le circuit secondaire 21 traverse le condenseur 16 de manière à échanger de la chaleur avec le fluide caloporteur. Le circuit secondaire 21 comporte de plus un échangeur de chaleur 23 se présentant sous la forme d'un serpentin, disposé à l'intérieur du réservoir 3 du chauffe-eau, de manière à échanger de la chaleur avec le fluide contenu dans le réservoir 3.

La structure des moyens d'échange de chaleur 10 est décrite ci-dessus en combinaison avec une ventilation de type double-flux. Toutefois, la structure des moyens d'échange de chaleur 10 reste inchangée dans le cas d'une ventilation simple flux, seuls le réseau d'insufflation d'air 11 et l'échangeur de chaleur de type double flux 18 étant dans ce cas inexistants.

Il apparaît ainsi que l'installation selon l'invention permet de récupérer, au moins en partie, l'énergie thermique disponible dans l'air extrait de manière à la transférer au fluide contenue dans le réservoir afin de produire de l'eau chaude sanitaire avec un rendement élevé.

En outre, une telle installation peut être adaptée à des habitations collectives, du fait de l'utilisation d'un réseau d'extraction d'air commun aux différents logements auquel chaque conduite d'extraction d'air correspondante est raccordée.

De plus, dans le cas particulier de la ventilation double flux, l'utilisation d'un échangeur de type double flux permet de limiter les déperditions thermiques au travers de l'air extrait.

## Revendications

1. Installation de production d'eau chaude sanitaire pour une habitation collective (1) comportant une pluralité de chauffe-eau, destinés à équiper une pluralité de logements individuels (2) de l'habitation (1), chaque chauffe-eau comportant un réservoir (3) à l'intérieur duquel est stocké un fluide à chauffer, chaque logement (2) étant en outre équipé d'au moins une conduite d'extraction d'air (4), en particulier au niveau des pièces techniques (5), raccordée à un réseau d'extraction d'air (8) commun aux différents logements (2), chaque logement comportant en outre des moyens d'échange de chaleur (10) agencés pour échanger de la chaleur entre l'air extrait circulant dans la conduite d'extraction d'air (4) et le fluide contenu dans le réservoir (3), de manière à chauffer le fluide en vue de produire de l'eau chaude sanitaire, **caractérisé en ce que** le réseau d'extraction d'air (8) commun aux différents logements (2) est équipé d'au moins un ventilateur (9) apte à créer une dépression dans ledit réseau d'extraction, de manière à effectuer l'extraction d'air de chaque logement.

2. Installation selon la revendication 1, **caractérisée en ce que** les moyens d'échange de chaleur (10) comportent un circuit thermodynamique (13) à l'intérieur duquel circule un fluide frigorigène, le circuit thermodynamique comportant un évaporateur (14) agencé pour échanger de la chaleur avec l'air extrait, un compresseur (15), un détendeur (17), et un condenseur (16) agencé pour échanger de la chaleur avec le fluide contenu dans le réservoir (3).

3. Installation selon l'une des revendications 1 et 2, **caractérisée en ce que** le condenseur (16) est disposé à l'intérieur du réservoir (3) du chauffe-eau, de manière à échanger directement de la chaleur avec le fluide contenu dans le réservoir (3).

4. Installation selon l'une des revendications 1 et 2, **caractérisée en ce que** moyens d'échange de chaleur (10) comportent un circuit secondaire (21) d'échange de chaleur à l'intérieur duquel circule un fluide caloporteur, traversant le condenseur (16) de manière à échanger de la chaleur avec le fluide caloporteur, le circuit secondaire (21) comportant en outre un échangeur de chaleur (23) disposé à l'intérieur du réservoir (3) du chauffe-eau, de manière à échanger de la chaleur avec le fluide contenu dans le réservoir (3).

5. Installation selon l'une des revendications 1 à 4, **caractérisée en ce qu'**elle comporte un réseau d'insufflation d'air (11) commun aux différents logements (2), chaque logement étant équipé d'un échangeur de chaleur de type double flux (18), dans lequel le flux d'air insufflé (F1) dans le logement (2) et provenant du réseau d'insufflation d'air (11) échange de la chaleur avec le flux d'air (F2) extrait du logement (2).

6. Installation selon la revendication 5, **caractérisée en ce que** l'échangeur de chaleur de type double flux (18) est disposé en amont des moyens d'échange de chaleur (10) entre l'air extrait et le fluide contenu dans le réservoir (3), dans le sens de circulation de l'air extrait.

7. Installation selon l'une des revendications 5 et 6, **caractérisée en ce qu'**elle comporte des moyens de recyclage (20) permettant de diriger une partie de l'air insufflé provenant du réseau d'insufflation (11), directement dans le réseau d'extraction d'air (8), en amont des moyens d'échange de chaleur (10) dans le sens de circulation de l'air extrait.

8. Installation selon l'une des revendications 1 à 7, **caractérisée en ce que** le réseau d'insufflation d'air (11) commun aux différents logements (2) est équipé d'au moins un ventilateur apte à effectuer l'insufflation d'air de chaque logement.

## Patentansprüche

1. Installation zur Produktion von sanitärem Warmwasser für eine kollektive Unterkunft (1), umfassend eine Vielzahl von Wasserwärmern, dafür bestimmt, eine Vielzahl von einzelnen Wohneinheiten (2) der Unterkunft (1) auszustatten, wobei jeder Wasserwärmer einen Tank (3) umfasst, in dessen Inneren ein zu erwärmendes Fluid aufbewahrt wird, wobei jede Wohneinheit (2) weiter ausgestattet ist mit wenigstens einer Luftabführungsleitung (4), insbesondere im Bereich der technischen Räume (5), angeschlossen an ein den verschiedenen Wohneinheiten (2) gemeinsames Luftabführungsnetz (8), wobei jede Wohneinheit weiter Wärmetauschmittel (10) umfasst, dafür ausgelegt, Wärme auszutauschen zwischen der Abluft, die in der Luftabführungsleitung (4) zirkuliert, und dem in dem Tank (3) enthaltenen Fluid, sodass das Fluid zwecks der Produktion von sanitärem Warmwasser erwärmt wird, **dadurch gekennzeichnet, dass** das den verschiedenen Wohneinheiten (2) gemeinsame Luftabführungsnetz (8) mit wenigstens einem Ventilator (9) ausgestattet ist, dafür geeignet, einen Unterdruck in dem Abführungsnetz zu erzeugen, sodass die Luftabführung jeder Wohneinheit durchgeführt wird.

2. Installation nach Anspruch 1, **dadurch gekennzeichnet, dass** die Wärmetauschmittel (10) einen thermodynamischen Kreislauf (13) umfassen, in dessen Inneren ein Kühlfluid zirkuliert, wobei der thermodynamische Kreislauf einen Verdampfer (14) umfasst, dafür ausgelegt, Wärme mit der Abluft auszutauschen, einen Kompressor (15), einen Druckminderer (17) und einen Kondensator (16), dafür ausgelegt, mit dem in dem Tank (3) enthaltenen Fluid Wärme auszutauschen.

3. Installation nach einem der Ansprüche 1 und 2, **dadurch gekennzeichnet, dass** der Kondensator (16) im Inneren des Tanks (3) des Wasserwärmers angeordnet ist, sodass er mit dem in dem Tank (3) enthaltenen Fluid direkt Wärme austauscht.

4. Installation nach einem der Ansprüche 1 und 2, **dadurch gekennzeichnet, dass** die Wärmetauschmittel (10) einen sekundären Wärmetauschkreislauf (21) umfassen, in dessen Inneren ein Wärmeträger-Fluid zirkuliert, das den Kondensator (16) durchquert, sodass Wärme mit dem Wärmeträger-Fluid ausgetauscht wird, wobei der sekundäre Kreislauf (21) weiter einen Wärmetauscher (23) umfasst, angeordnet im Inneren des Tanks (3) des Wasserwärmers, sodass er mit dem in dem Tank (3) enthaltenen Fluid Wärme austauscht.

5. Installation nach einem der Ansprüche 1 bis 4, **dadurch gekennzeichnet, dass** sie ein den verschiedenen Wohneinheiten (2) gemeinsames Luftinsufflationsnetz (11) umfasst, wobei jede Wohneinheit mit einem Wärmetauscher vom Typ Doppelstrom (18) ausgestattet ist, in dem der in die Wohneinheit (2) eingesaugte und aus dem Luftinsufflationsnetz (11) kommende Luftstrom (F1) mit dem aus der Wohneinheit (2) abgeführten Luftstrom (F2) Wärme austauscht.

6. Installation nach Anspruch 5, **dadurch gekennzeichnet, dass** der Wärmetauscher vom Typ Doppelstrom (18) den Wärmetauschmitteln (10) vorgeschaltet zwischen der Abluft und dem in dem Tank (3) enthaltenen Fluid in der Richtung der Zirkulation der Abluft angeordnet ist.

7. Installation nach einem der Ansprüche 5 und 6, **dadurch gekennzeichnet, dass** sie Aufbereitungsmittel (20) umfasst, die es ermöglichen, einen Teil der von dem Insufflationsnetz (11) kommenden eingesaugten Luft direkt in das Luftabführungsnetz (8) zu führen, den Wärmetauschmitteln (10) in Richtung der Zirkulation der Abluft vorgeschaltet.

8. Installation nach einem der Ansprüche 1 bis 7, **dadurch gekennzeichnet, dass** das den verschiedenen Wohneinheiten (2) gemeinsame Luftinsufflationsnetz (11) mit wenigstens einem Ventilator ausgestattet ist, dafür geeignet, eine Luftinsufflation jeder Wohneinheit durchzuführen.

## Claims

1. An installation for producing domestic hot water for a congregate housing (1) including a plurality of water heaters, intended to equip a plurality of individual dwellings (2) of the housing (1), each water heater including a tank (3) inside which a fluid to be heated is stored, each dwelling (2) being further equipped with at least one air extraction conduit (4), in particular at the level of the technical rooms (5), connected to an air extraction network (8) common to the different dwellings (2), each dwelling further including heat exchange means (10) arranged to exchange heat between the extracted air circulating in the air extraction conduit (4) and the fluid contained in the tank (3), so as to heat the fluid in order to produce domestic hot water, **characterized in that** the air extraction network (8) common to the different dwellings (2) is equipped with at least one fan (9) adapted to create a depression in said extraction network, so as to perform the extraction of air from each dwelling.

2. The installation according to claim 1, **characterized in that** the heat exchange means (10) include a thermodynamic circuit (13) inside which a refrigerant fluid circulates, the thermodynamic circuit including an evaporator (14) arranged to exchange heat with the extracted air, a compressor (15), a pressure reducer valve (17), and a condenser (16) arranged to exchange heat with the fluid contained in the tank (3).

3. The installation according to any of claims 1 and 2, **characterized in that** the condenser (16) is disposed inside the tank (3) of the water heater, so as to directly exchange heat with the fluid contained in the tank (3).

4. The installation according to any of claims 1 and 2, **characterized in that** the heat exchange means (10) include a heat exchange secondary circuit (21) inside which a heat-transfer fluid circulates, passing through the condenser (16) so as to exchange heat with the heat-transfer fluid, the secondary circuit (21) further including a heat exchanger (23) disposed inside the tank (3) of the water heater, so as to exchange heat with the fluid contained in the tank (3).

5. The installation according to any of claims 1 to 4, **characterized in that** it includes an air blowing network (11) common to the different dwellings (2), each dwelling being equipped with a double-flow type heat exchanger (18), in which the air flow (F1) blown into the dwelling (2) and coming from the air blowing network (11) exchanges heat with the air flow (F2) extracted from the dwelling (2).

6. The installation according to claim 5, **characterized in that** the double-flow type heat exchanger (18) is disposed upstream of the means (10) for exchanging heat between the extracted air and the fluid contained in the tank (3), in the direction of circulation of the extracted air.

7. The installation according to any of claims 5 and 6, **characterized in that** it includes recycling means (20) allowing directing a portion of the blown air coming from the blowing network (11), directly in the air extraction network (8), upstream of the heat exchange means (10) in the direction of circulation of the extracted air.

8. The installation according to any of claims 1 to 7, **characterized in that** the air blowing network (11) common to the different dwelling (2) is equipped with at least one fan adapted to perform the air blowing of each dwelling.
